# EUROPEAN PATENT APPLICATION

(11) **EP 4 789 875 A1**
(43) Date of publication of application: **12.08.2026**
(21) Application number: 24874358.5
(22) Date of filing: 15.08.2024
(51) Int. Cl.: B41J 29/38, B41J 29/00, B41J 29/42, G06F 3/12

(54) **PRINTER**

(30) Priority: 05.10.2023 JP 2023173800
(71) Applicant: Citizen Systems Japan CO., LTD., Nishitokyo-shi, Tokyo 188-8511 (JP)
(72) Inventor: TAKAHASHI, Satoshi, Nishitokyo-shi, Tokyo 188-8511 (JP)
(74) Representative: Wagner, Jürgen
(86) International application number: PCT/JP2024/029090
(87) International publication number: WO 2025/074744

(57) **Abstract**

For switching setting information respectively corresponding to different types of printer drivers in a standalone state not connected to a host device, a printer (100) includes a printing portion (50), a transport portion (60), a communication portion (40), a display portion (20) that displays setting information including device IDs, an operation portion (30) (input portion) that selects a device ID displayed on the display portion (20), and a control portion (10). The control portion (10) includes a memory (14) (storage portion) and a processing portion (13). The memory (14) stores different device IDs respectively corresponding to printer drivers and programs that control the printing portion (50) and the transport portion (60) for each device ID. The processing portion (13) executes a program corresponding to a device ID. The processing portion (13) executes a program corresponding to a device ID selected by the operation portion (30) from a plurality of device IDs displayed on the display portion (20).

## Description

### [Technical Field]

The present invention relates to a printer.

### [Background Art]

A printer is used by being connected to a host device such as a personal computer, tablet device or cash register. The printer must include firmware. To operate the printer that is to be connected, the host device must include a printer driver compatible with the connected printer. The printer driver of the host device must be compatible with the connected printer.

Here, the printer may be replaced with another model, such as a new model, due to its malfunction or other reasons, or another printer model may be connected in addition to the printer already connected.

In these cases, the host device must include a printer driver compatible with the newly connected printer. If the host device does not include such printer driver, the host device must be connected to a server or the like to install the printer driver in the host device, or the firmware of the newly connected printer must be updated from the host device to enable the printer to operate by the existing printer driver in the host device.

Furthermore, in a system where multiple cash registers, multiple types of printers, and a computer are connected via a network, it is necessary for the computer to adjust the settings for each printer by using a printer driver specific to each printer type (see, for example, Patent Literature 1).

### [Prior Art Documents]

### [Patent Literature]

[Patent Literature 1] Japanese Patent No. 3838467

### [Summary of Invention]

### [Problem to be solved]

However, operations, such as installing a printer driver in the host device or updating the firmware of the printer from the host device, place a burden on the printer user. Furthermore, if the host device is not a multifunctional device such as a personal computer, in other words, if it is, for example, a cash register, it is impossible to install a new printer driver in the cash register or to update the firmware of the printer from the cash register. Therefore, as described above, it is necessary to adjust the printer (such as updating firmware) by a computer, which causes the problem of requiring considerable effort and a long time.

The present invention has been made in view of the above-mentioned circumstances. An object of the present invention is to provide a printer that is capable of switching between pieces of setting information respectively corresponding to different types of printer drivers in a standalone state (printer alone) not connected to a host device.

### [Solution to Problem]

The present invention provides a printer. The printer includes a printing portion that is configured to print on a printing medium; a transport portion that is configured to transport the printing medium; a communication portion that is configured to communicate with an external host device when connected to the host device; an operation portion that is configured to receive an input of an operation; and a control portion that is configured to control the printing portion, the transport portion, the communication portion, and the operation portion. The control portion comprises a storage portion and a processing portion. The storage portion is configured to store a plurality of device IDs respectively corresponding to printer drivers, and setting information corresponding to programs that control the printing portion and the transport portion for each of the device IDs. The processing portion is configured to execute a program corresponding to a device ID selected from the plurality of the device IDs according to an operation that is input to the operation portion.

### [Effects of Invention]

The printer according to the present invention is capable of switching between pieces of setting information respectively corresponding to different types of printer drivers in a standalone state (printer alone) not connected to the host device.

### [Brief Description of Drawings]

[FIG. 1] FIG. 1 is a perspective view showing the external appearance of a printer.
[FIG. 2] FIG. 2 is a block diagram showing the configuration of the printer.
[FIG. 3] FIG. 3 shows device IDs via the USB interface, where (a) indicates a device ID corresponding to a model name of Printer 3, (b) indicates a device ID corresponding to a model name of Printer 2, and (c) indicates a device ID corresponding to a model name of Printer 1.
[FIG. 4] FIG. 4 shows device IDs via the parallel interface (IEEE 1284), where (a) indicates a device ID corresponding to a model name of Printer 3, (b) indicates a device ID corresponding to a model name of Printer 2, and (c) indicates a device ID corresponding to a model name of Printer 1.
[FIG. 5] FIG. 5 is a schematic view showing a condition where a communication portion of the printer is connected to a communication portion of the host PC by a USB interface or parallel interface.
[FIG. 6] FIG. 6 is a flowchart showing a process in which the host PC operates the printer after the printer and the host PC are connected.
[FIG. 7] FIG. 7 is a schematic view showing a condition where the printer changes the device ID corresponding to the model name of Printer 3 to the device ID corresponding to the model name of Printer 2 or to the device ID corresponding to the model name of Printer 1.
[FIG. 8] FIG. 8 is a perspective view showing a printer of a second embodiment.
[FIG. 9] FIG. 9 is a block diagram showing the configuration of the printer shown in FIG. 8.
[FIG. 10] FIG. 10 is a schematic view showing an exemplary thermal paper on which the device ID has been printed by the printer of the second embodiment.

### [Detailed Description of Embodiments]

In the following, embodiments of the printer according to the present invention will be described with reference to the drawings.

### (First Embodiment)

### <Overall Configuration>

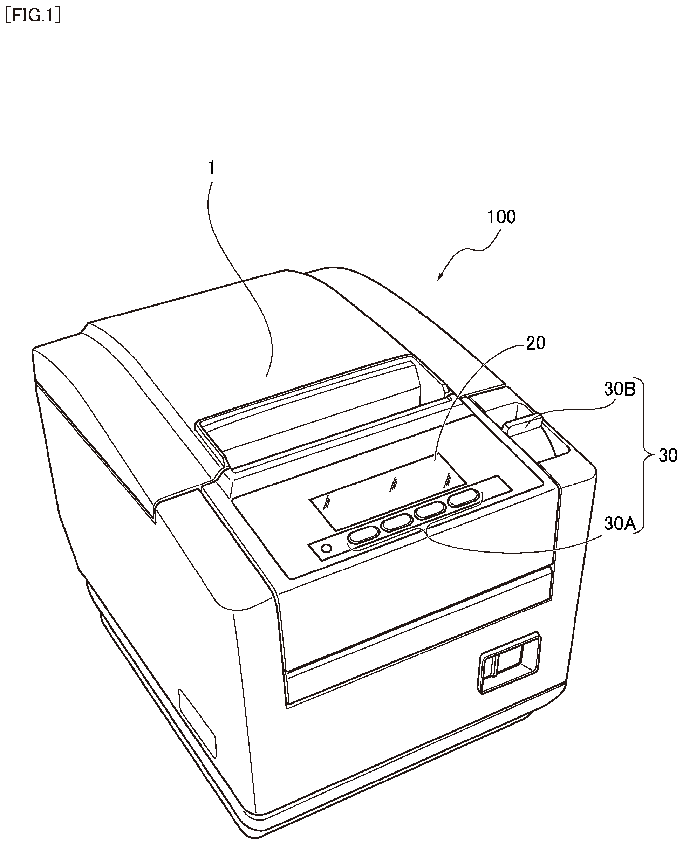

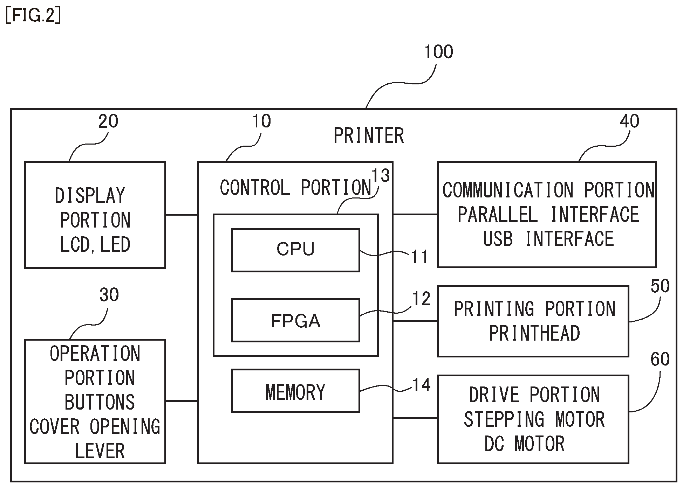

FIG. 1 is a perspective view showing the external appearance of a printer 100. FIG. 2 is a block diagram showing the configuration of the printer 100. The printer 100 shown in FIGS. 1 and 2 is one embodiment (first embodiment) of a printer according to the present invention.

The printer 100 is, as one example, a thermal printer that prints on thermal paper as a printing medium using a thermal head. The printer 100 is not limited to a thermal printer, but may be anything that is connected to a host device, such as a personal computer, tablet terminal, or cash register and performs printing according to printing commands from the host device.

As shown in FIG. 1, the printer 100 has a rectangular box shape as a whole. The printer 100 includes a display portion 20 at a front portion on its top surface, and a plurality of physical operation portions 30 forward of the display portion 20. In addition to the display portion 20 and operation portions 30, the printer 100 includes a control portion 10, a communication portion 40, a printing portion 50, and a transport portion 60 as shown in FIG. 2.

The display portion 20 is, for example, a liquid crystal display portion (LCD). The display portion 20 includes at least one LED configured to indicate whether the power supply is energized (on-state) or de-energized (off-state) and to indicate that a thermal paper roll is nearly empty or has run out by illumination, de-illumination, or a color of illumination. The display portion 20 displays the various pieces of setting information of the printer 100, which are mentioned below. The various pieces of setting information are, for example, pieces of print setting information (whether line spacing is compressed or not, whether vertical/horizontal reduction is performed or not, whether watermark printing is performed or not) and a plurality of device IDs stored in a selectable storage portion.

The user inputs operation to the operation portion 30. The operation portion 30 includes a cover opening/closing operation portion 30B and a switch operation portion 30A. The cover opening/closing operation portion 30B is a cover opening lever that receives an operation to open or close a paper cover 1. The paper cover 1 covers a paper storage compartment containing thermal paper.

The switch operation portion 30A includes a plurality of buttons (in the present embodiment, four buttons as one example). A piece of setting information of the printer 100 is changed or selected, and the thermal paper is fed (transported), by inputting the operations of pressing these buttons.

One of the four buttons is a switch button (an example of a switching portion) that sequentially switches a device ID displayed on the display portion 20 among three device IDs described later to each of the other two device IDs one by one. Another button is a determination button (an example of a determination portion) that determines, as a device ID to be selected, the device ID switched by the switch button and displayed on the display portion 20. A separate button different from the above two buttons has a function of feeding (transporting) the thermal paper by a predetermined length. When the button is pressed, the thermal paper is fed by the predetermined length.

The functions of the four buttons need not correspond to the functions mentioned above. The functions assigned to the four buttons may be changed according to setting information displayed on the display portion 20.

The printing portion 50 prints on thermal paper. The printing portion 50 includes a printhead, such as a thermal head.

The transport portion 60 feeds the thermal paper during printing by the printing portion 50 or transports the printed thermal paper to discharge the printed thermal paper. The transport portion 60 includes, for example, a stepping motor or a DC motor as a drive source for transport of the thermal paper.

When the communication portion 40 is connected to an external personal computer 200 (an example of a host device, hereinafter referred to as host PC 200), the communication portion 40 communicates with the host PC 200. The connection with the host PC 200 is performed via an interface such as a USB (Universal Serial Bus) interface or a parallel interface (IEEE 1284).

The control portion 10 controls the printing portion 50, the transport portion 60, the communication portion 40, the display portion 20, and the operation portion 30. The control portion 10 includes a memory 14 (storage portion) and a processing portion 13. The memory 14 stores different device IDs respectively corresponding to printer drivers, and setting information corresponding to firmware (program) that controls the printing portion 50 and the transport portion 60 and that corresponds to the respective device IDs. As one example, the memory 14 of the printer 100 of the present embodiment stores three device IDs. The processing portion 13 includes a CPU 11 and an FPGA (field-programmable gate array) 12. The processing portion 13 reads firmware from the memory 14 and executes, among the firmware, a program corresponding to a selected device ID.

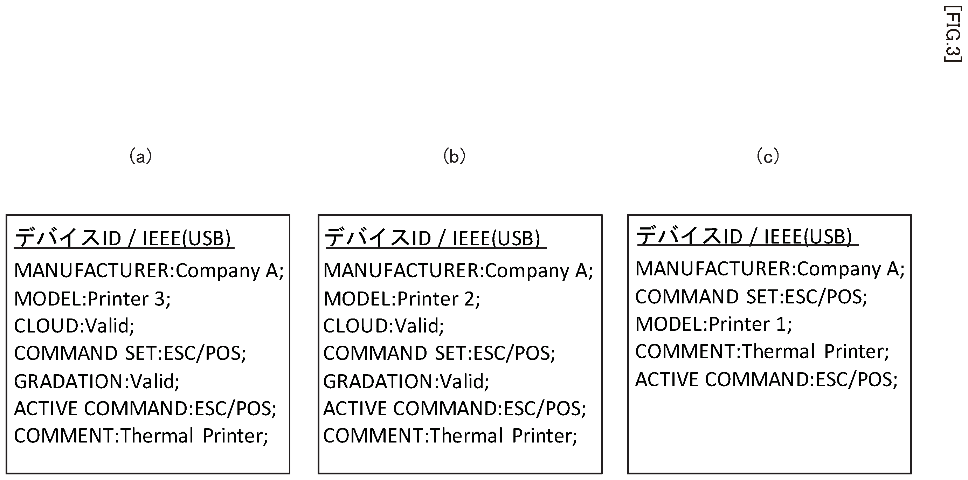

FIG. 3 shows examples of information recorded for each of three device IDs stored in the memory 14, as illustrated in (a), (b), and (c). As shown in (a), (b), and (c) of FIG. 3, the device IDs include information such as the name of the manufacturer (MANUFACTURE) of the printer 100 and the model name (MODEL) of the printer 100. The device ID shown in (a) of FIG. 3 has a model name of Printer 3. The device ID shown in (b) of FIG. 3 has a model name of Printer 2. The device ID shown in (c) of FIG. 3 has a model name of Printer 1. The device IDs shown in (a), (b), and (c) of FIG. 3 have different model names.

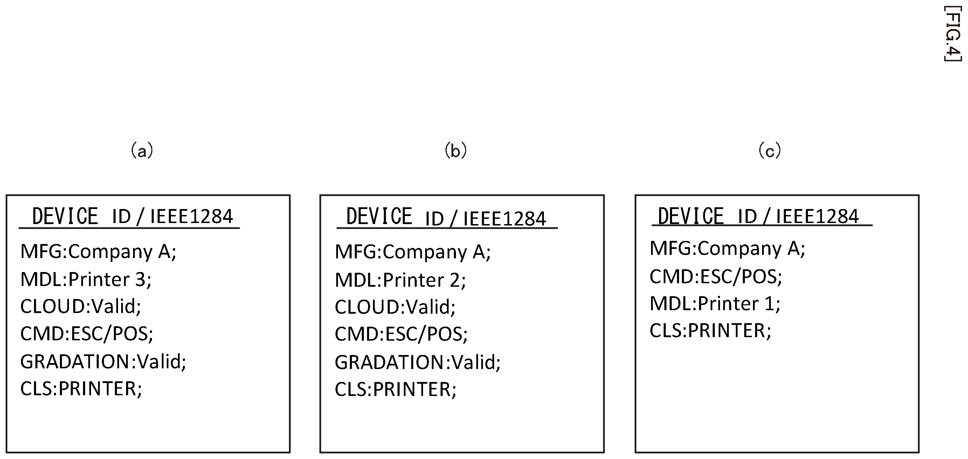

FIG. 3 shows device IDs represented via the USB interface, as illustrated in (a), (b), and (c). On the other hand, device IDs represented via the parallel interface (IEEE 1284) are shown in (a), (b), and (c) of FIG. 4. The device ID shown in (a) of FIG. 4 corresponds to the device ID corresponding to the model name of Printer 3 shown in (a) of FIG. 3. The device ID shown in (b) of FIG. 4 corresponds to the device ID corresponding to the model name of Printer 2 shown in (b) of FIG. 3. The device ID shown in (c) of FIG. 4 corresponds to the device ID corresponding to the model name of Printer 1 shown in (c) of FIG. 3.

The printer with the model name of Printer 3 is, for example, a successor model or a backward-compatible model of the printer with the model name of Printer 2. The printer with the model name of Printer 3 includes functions not present in the printer with the model name of Printer 2, in addition to the basic functions of the printer with the model name of Printer 2. The printer with the model name of Printer 2 is, for example, a successor model or a backward-compatible model of the printer with the model name of Printer 1. The printer with the model name of Printer 2 includes functions not present in the printer with the model name of Printer 1, in addition to the basic functions of the printer with the model name of Printer 1.

The functions implemented for each printer model are determined by a program corresponding to the device ID in the firmware.

The functions of the printer with the model name of Printer 3 can be executed using the latest printer driver A, but cannot be executed using an older generation printer driver B that supports the printer with the model name of Printer 2, or an older generation printer driver C that supports the printer with the model name of Printer 1.

Similarly, the functions of the printer with the model name of Printer 2 can be executed using printer driver A or printer driver B, but cannot be executed using an older generation printer driver C that supports the printer with the model name of Printer 1.

The functions of the printer with the model name of Printer 1 can be operated by any of the printer drivers A, B and C.

Here, the printer 100 is, for example, a printer with the model name of Printer 3. Therefore, the original device ID of the printer 100 is as shown in FIG. 3(a). However, the printer 100 can operate as a printer with the model name of Printer 2, which is an earlier or lower-end model, and the printer 100 can also operate as a printer with the model name of Printer 1, which is an earlier or lower-end model of the printer with the model name of Printer 2.

The printer 100 includes, in addition to the device ID corresponding to the original model name of Printer 3 (see FIG. 3(a)), the device ID corresponding to the model name of Printer 2, which is a previous model or a lower-end model (FIG. 3(b)), and the device ID corresponding to the model name of Printer 1, which is a further previous model or a further lower-end model (FIG. 3(c)).

The firmware stored in the memory 14 is a program that operates the printer 100 to perform functions corresponding to the printer with the original model name of Printer 3 (device ID of FIG. 3(a)). However, as mentioned above, the firmware includes a program that operates the printer 100 to perform functions corresponding to the printer with the model name of Printer 2 (device ID of FIG. 3(b)) and a program that operates the printer 100 to perform functions corresponding to the printer with the model name of Printer 1 (device ID of FIG. 3(c)).

Therefore, when the device ID of FIG. 3(a) is selected, the printer 100 operates the printing portion 50 and the transport portion 60 by causing the processing portion 13 to read a program corresponding to the printer with the model name of Printer 3 from the memory 14 and to execute the program. When the device ID of FIG. 3(b) is selected, the printer 100 operates the printing portion 50 and the transport portion 60 by causing the processing portion 13 to read a program corresponding to the printer with the model name of Printer 2 from the memory 14 and to execute the program. When the device ID of FIG. 3(c) is selected, the printer 100 operates the printing portion 50 and the transport portion 60 by causing the processing portion 13 to read a program corresponding to the printer with the model name of Printer 1 from the memory 14 and to execute the program.

When the switch button of the operation portion 30 is pressed, the display portion 20 displays one of the three device IDs mentioned above under control of the control portion 10. Specifically, the display portion 20 initially displays the device ID corresponding to the default model name of Printer 3 under control of the control portion 10. When the switch button of the operation portion 30 is pressed again, the display portion 20 displays the device ID corresponding to the model name of Printer 2 in place of the device ID corresponding to the model name of Printer 3 under control of the control portion 10.

When the switch button of the operation portion 30 is pressed again, the display portion 20 displays the device ID corresponding to the model name of Printer 1 in place of the device ID corresponding to the model name of Printer 2 under control of the control portion 10. When the switch button is pressed once more, the display portion 20 displays the device ID corresponding to the model name of Printer 3 in place of the device ID corresponding to the model name of Printer 1 under control of the control portion 10. Hereinafter, the printer 100 sequentially switches the device ID displayed on the display portion 20 each time the switch button is pressed.

When the determination button of the operation portion 30 is pressed while one device ID is displayed on the display portion 20, the printer 100 determines the displayed device ID as a device ID to be selected. The control portion 10 controls the printer 100 to operate as a printer corresponding to the selected device ID. In other words, the control portion 10 controls the printing portion 50 and the transport portion 60 such that the processing portion 13 executes, from the firmware, a program corresponding to the selected device ID, and the control portion 10 notifies the communication portion 40 of the selected device ID.

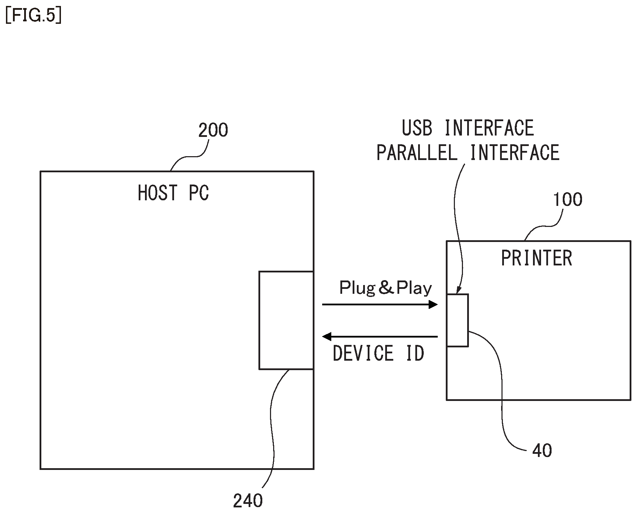

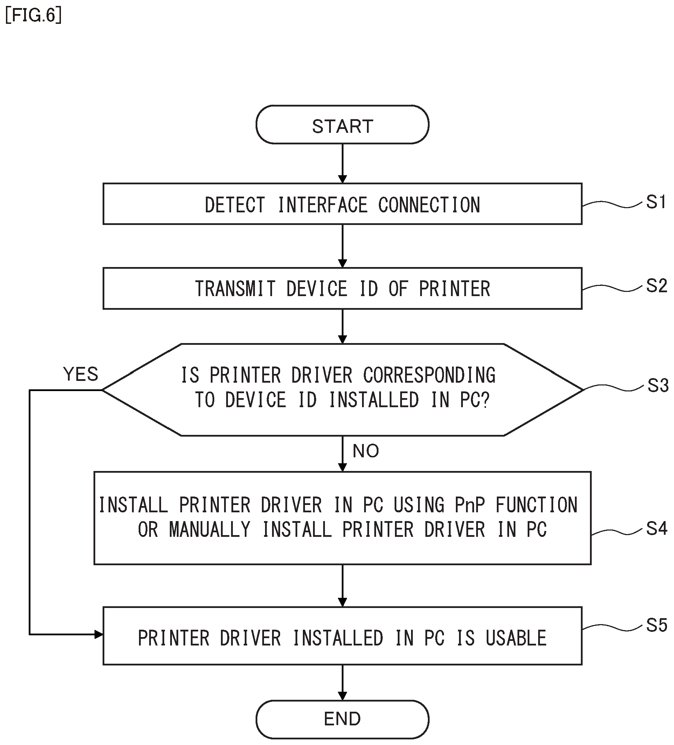

Furthermore, as shown in FIG. 5, when the communication portion 40 of the printer 100 is connected to the communication portion 40 of the host PC 200 via a USB interface or a parallel interface, the control portion 10 detects, through a plug-and-play function, that the host PC 200 has been connected to the communication portion 40 (S1 in FIG. 6). Then, the control portion 10 transmits the selected device ID to the host PC 200 via the communication portion 40 (S2 in FIG. 6).

As a result, the host PC 200 detects whether a printer driver corresponding to the device ID transmitted from the printer 100 is installed in the host PC 200 (S3 in FIG. 6). When the host PC 200 detects that the printer driver corresponding to the device ID transmitted from the printer 100 is installed (YES at S3 in FIG. 6), the host PC 200 operates the connected printer 100 using the printer driver installed in the host PC 200 (S5 in FIG. 6).

In contrast, when the host PC 200 detects that a printer driver corresponding to the device ID transmitted from the printer 100 is not installed (NO at S3 in FIG. 6), the host PC 200 connects to another server. Then, a printer driver corresponding to the device ID transmitted from the printer 100 is installed in the host PC 200 either automatically through a plug-and-play function or through manual operation by a user (S4 in FIG. 6). Thereafter, the host PC 200 operates the connected printer 100 using the installed printer driver (S5 in FIG. 6).

Even if the host PC 200 detects that no printer driver corresponding to the device ID transmitted from the printer 100 is installed (NO at S3 in FIG. 6), when a printer driver corresponding to any of the plurality of device IDs selectable by the printer 100 is installed in the host PC 200, the printer 100 can be operated by selecting, in the printer 100, the device ID corresponding to the printer driver installed in the host PC 200 and by using the printer driver installed in the host PC 200.

For example, when the device ID selected in the printer 100 corresponds to the printer with the model name of Printer 3, the device ID of the model name of Printer 3 is transmitted to the host PC 200.

When the printer driver A corresponding to the device ID of the model name of Printer 3 is not installed in the host PC 200, but the printer driver B corresponding to the device ID of the older model name of Printer 2 is installed in the host PC 200, the host PC 200 cannot operate the printer 100 in which the device ID corresponding to the model name of Printer 3 is selected, by using the installed printer driver B.

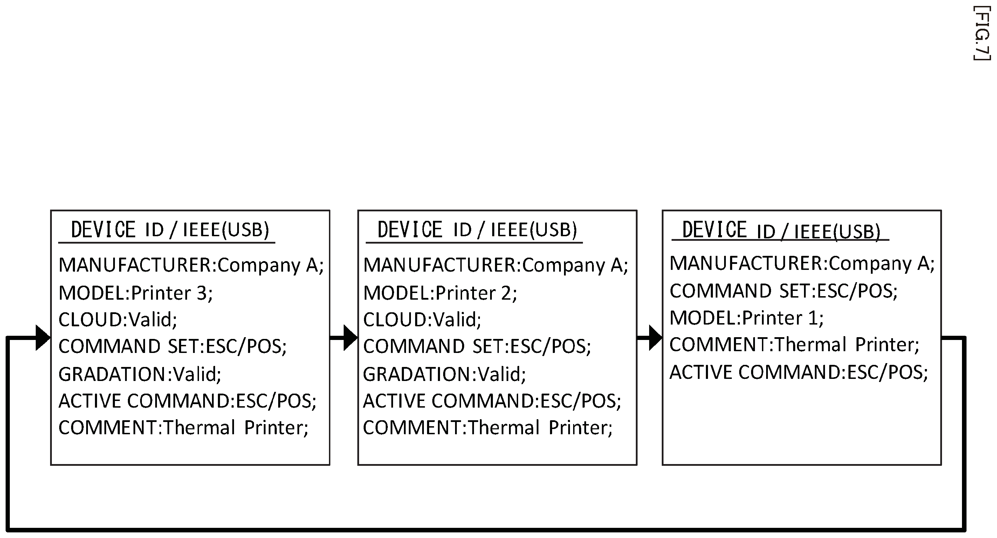

However, in this case, when the printer 100 changes the selected device ID from the default device ID corresponding to the model name of Printer 3 shown on the left side of FIG. 7 to the device ID corresponding to the model name of Printer 2 shown in the middle of FIG. 7 (that is, the printer 100 selects the device ID corresponding to the model name of Printer 2) in response to a pressing operation of the switch button once, the device ID corresponding to the model name of Printer 2 is transmitted from the printer 100 to the host PC 200. Thus, the host PC 200 can operate the connected printer 100 as a printer corresponding to the model name of Printer 2 by using the installed printer driver B.

Furthermore, when the printer 100 changes the selected device ID from the default device ID corresponding to the model name of Printer 3 shown on the left side of FIG. 7 to the device ID corresponding to the model name of Printer 1 shown on the right side of FIG. 7 (that is, the printer 100 selects the device ID corresponding to the model name of Printer 1) in response to a pressing operation of the switch button twice, the device ID corresponding to the model name of Printer 1 is transmitted from the printer 100 to the host PC 200. Thus, the host PC 200 can also operate the connected printer 100 as a printer corresponding to the model name of Printer 1 by using the installed printer driver B.

Similarly, when the printer driver A corresponding to the device ID of the model name of Printer 3 or the printer driver B corresponding to the device ID of the model name of Printer 2 is not installed in the host PC 200, but the printer driver C corresponding to the device ID of the older model name of Printer 1 is installed in the host PC 200, the host PC 200 cannot operate the printer 100 in which the device ID corresponding to the model name of Printer 3 is selected, or the printer 100 in which the device ID corresponding to the model name of Printer 2 is selected, by using the installed printer driver C.

However, in this case, when the printer 100 changes the selected device ID from the default device ID corresponding to the model name of Printer 3 shown on the left side of FIG. 7 to the device ID corresponding to the model name of Printer 1 shown on the right side of FIG. 7 (that is, the printer 100 selects the device ID corresponding to the model name of Printer 1) in response to a pressing operation of the switch button twice, the device ID corresponding to the model name of Printer 1 is transmitted from the printer 100 to the host PC 200. Thus, the host PC 200 can operate the connected printer 100 as a printer corresponding to the model name of Printer 1 by using the installed printer driver C.

As described above, the printer 100 of the present embodiment can switch the device ID, which is one of pieces of setting information respectively corresponding to different types of drivers, in a standalone state (printer 100 alone) not connected to the host PC 200 or another device.

Therefore, when the host PC 200 including a printer driver corresponding to any of the plurality of device IDs stored in the memory 14 is connected to the printer 100 of the present embodiment, the printer 100 can switch, in a standalone state not connected to the host PC 200 or another device, to a program (firmware) corresponding to the device ID corresponding to the printer driver included in the host PC 200.

(Second Embodiment) The printer 100 of the first embodiment described above includes the display portion 20 for displaying the setting information of the printer 100. However, the printer according to the present invention need not include the display portion.

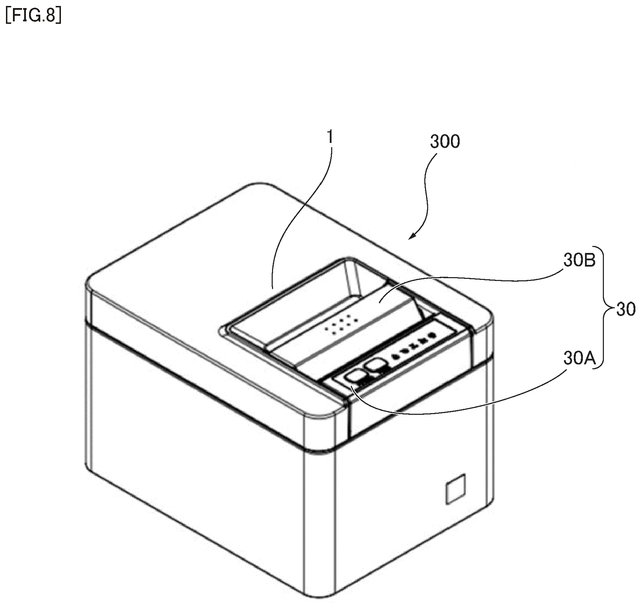

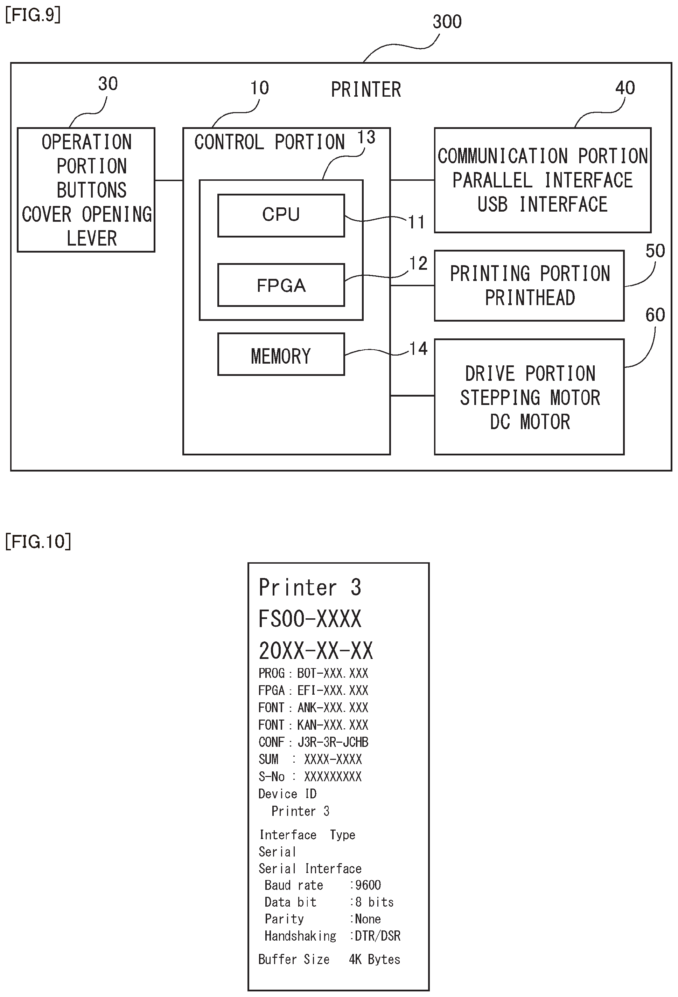

FIG. 8 is a perspective view showing a printer 300. FIG. 9 is a block diagram showing the configuration of the printer 300. The printer 300 is the second embodiment of the printer according to the present invention.

As shown in FIG. 8, the printer 300, similar in external appearance to the printer 100, has a rectangular box shape. The printer 300 includes a plurality of physical operation portions 30 at a front portion of a top surface of the printer 300. As shown in FIG. 9, the printer 300 further includes a control portion 10, a communication portion 40, a printing portion 50, and a transport portion 60, in addition to the operation portions 30.

The printer 300 has a basic configuration identical to that of the printer 100. However, the printer 300 differs from the printer 100 in that the printer 300 does not include the display portion 20. Since the printer 300 does not include the display portion 20, the user cannot check the setting information on the display portion 20.

Thus, the printer 300 is configured to allow the user to check the setting information by inputting a predetermined operation to the operation portion 30 even without the display portion 20.

Specifically, the operation portion 30 of the printer 300 includes a cover opening/closing operation portion 30B configured to receive an input of an operation to open or close a paper cover 1, and a switch operation portion 30A configured to receive an input of an operation to change or select setting information and an operation to provide an instruction to transport thermal paper. The cover opening/closing operation portion 30B is a cover opening lever. The switch operation portion 30A includes a plurality of buttons, for example, two buttons.

The control portion 10 controls the printing portion 50 and the transport portion 60 according to operations input to the cover opening/closing operation portion 30B and the switch operation portion 30A and sequentially prints, one by one onto the thermal paper, a plurality of device IDs stored in the memory 14. Then, the processing portion 13 selects one device ID according to operations input to the cover opening/closing operation portion 30B and the switch operation portion 30A.

One button of the switch operation portion 30A serves as a switching portion that sequentially switches one device ID printed on the thermal paper to another device ID. The other button of the switch operation portion 30A serves as a determination portion that determines one device ID that has resulted from switching by the switching portion and that has been printed on the thermal paper.

The printer 300 prints, onto the thermal paper, one device ID that has resulted from switching by a combination of an input of an operation to the cover opening/closing operation portion 30B and an input of an operation to the button serving as the switching portion of the switch operation portion 30A. The user can confirm the device ID of the printer 300 at the time of printing by viewing the thermal paper on which the device ID has been printed.

When the user determines to select the set device ID, the user presses the button serving as the determination portion of the switch operation portion 30A. Accordingly, the processing portion 13 selects one device ID to be applied to the printer 300.

On the other hand, when the user does not select the set device ID after viewing the thermal paper on which the device ID has been printed, the processing portion 13 sequentially switches to another device ID and prints the switched device ID onto the thermal paper each time the user presses the button serving as the switching portion of the switch operation portion 30A. The user can confirm the device ID of the printer 300 at the time of printing by viewing the thermal paper on which the device ID has been printed.

Specifically, for example, when the power to the printer 300 is turned on while one button of the switch operation portion 30A is being pressed, an input of an operation to the switch operation portion 30A and an input of an operation to a power switch are made. Accordingly, the control portion 10 controls the printing portion 50 and the transport portion 60 to print setting information corresponding to a device ID (Printer 3) selected by default onto the thermal paper as shown in FIG. 10.

When the user confirms the device ID printed on the thermal paper, approves the printed device ID, and presses the button serving as a determination portion of the switch operation portion 30A, the processing portion 13 determines the device ID, selected at the time of printing, as a device ID of the printer 300.

On the other hand, when the user checks the device ID printed on the thermal paper, does not approve the printed device ID, and switches to another device ID, the button serving as a switching portion of the switch operation portion 30A is pressed. In response to the input of the operation to the switch operation portion 30A, the processing portion 13 switches the device ID to be set in the printer 300 to another device ID (for example, Printer 2). When the button serving as the switching portion is held down, for example, for two seconds or longer, an input of an operation to the switch operation portion 30A is made. Accordingly, the control portion 10 controls the printing portion 50 and the transport portion 60 to print setting information corresponding to the switched device ID (Printer 2) onto the thermal paper.

When the user checks the device ID printed on the thermal paper, approves the printed device ID, and presses the button serving as a determination portion of the switch operation portion 30A, the processing portion 13 determines the device ID, selected at the time of printing, as a device ID of the printer 300.

Since the printer 300 of the second embodiment does not include a display portion such as an LCD for displaying setting information, the printer 300 cannot display setting information including a device ID on a display portion. However, the printer 300 can print setting information including a device ID onto the thermal paper in response to an input of an operation to the operation portion 30. Therefore, the printer 300 can present a plurality of selectable device IDs to a user and can select one device ID by sequentially switching the device ID to be set in the printer 300 in response to an input of an operation to the operation portion 30.

The printer 300 of the second embodiment can switch a device ID, which is one of pieces of setting information respectively corresponding to different types of drivers, in a standalone state (printer 300 alone) not connected to the host PC 200 or another device.

Therefore, when the host PC 200 including a printer driver corresponding to any of the plurality of device IDs stored in the memory 14 is connected to the printer 300 of the second embodiment, the printer 300 can switch, in a standalone state not connected to the host PC 200 or another device, to a program (firmware) corresponding to a device ID corresponding to the printer driver included in the host PC 200.

In the printer 100 of the first embodiment and the printer 300 of the second embodiment, the selected device ID may be printed onto paper such as thermal paper in a so-called self-printing mode, thereby enabling the user to confirm it.

The self-printing mode is a mode that allows contents of setting information and other information in the printer 100, 300 to be printed onto paper for confirmation. For example, the self-printing mode can be activated by performing an operation of turning on power to the printer 100, 300 while pressing one button of the switch operation portion 30A to start a function test mode and thereafter pressing another button of the switch operation portion 30A.

The setting information and related information to be printed in the self-printing mode include, for example, those listed in the following (1) to (10). The listed items are examples, and contents to be printed in the self-printing mode are not limited to these items.
(1) printer model (type) name
(2) firmware version and device ID (driver ID)
(3) interface settings
(4) memory switch contents
(5) font A (20H to FFH)
(6) font B (20H to FFH)
(7) font C (20H to FFH)
(8) kanji font A: 192 characters
(9) kanji font C: 192 characters
(10) line feed to a cut position and cutting

### [Cross-reference to Related Application]

The present application is based upon and claims the benefit of priority from Japanese Patent Application No. 2023-173800 filed to the Japan Patent Office on October 5, 2023, the entire disclosure of which is incorporated in its entirety in the present specification by reference.

## Claims

1. A printer comprising:
a printing portion that is configured to print on a printing medium;
a transport portion that is configured to transport the printing medium;
a communication portion that is configured to communicate with an external host device when connected to the host device;
an operation portion that is configured to receive an input of an operation; and
a control portion that is configured to control the printing portion, the transport portion, the communication portion, and the operation portion,
wherein the control portion comprises a storage portion and a processing portion,
wherein the storage portion is configured to store a plurality of device IDs respectively corresponding to printer drivers, and setting information corresponding to programs that control the printing portion and the transport portion for each of the device IDs, and
wherein the processing portion is configured to execute a program corresponding to a device ID selected from the plurality of the device IDs according to an operation that is input to the operation portion.

2. The printer according to claim 1, wherein the processing portion is configured to select a device ID from the plurality of device IDs according to an input to the operation portion of at least one of an operation to open or close a paper cover of the printer, an operation to change or select the setting information, and an operation to provide an instruction to transport the printing medium, or an input to the operation portion of a combination of two or more of the operations.

3. The printer according to claim 2, wherein the operation portion comprises:
a cover opening/closing operation portion that is configured to receive an input of an operation to open or close the paper cover of the printer; and
a switch operation portion that is configured to receive an input of an operation to change or select the setting information and an input of an operation to provide an instruction to transport the printing medium,
wherein the processing portion is configured to select a device ID according to an operation that is input to at least one of the cover opening/closing operation portion and the switch operation portion.

4. The printer according to claim 1, wherein the control portion is configured to control the printing portion and the transport portion according to an operation that is input to the operation portion and to sequentially print the plurality of device IDs stored in the storage portion one by one onto the printing medium,
wherein the operation portion comprises:
a switching portion that is configured to sequentially switch a device ID printed onto the printing medium to another device ID; and
a determining portion that is configured to determine the device ID that has resulted from being switched by the switching portion and has been printed onto the printing medium,
wherein the processing portion is configured to select the device ID determined by the determining portion.

5. The printer according to claim 1, further comprising a display portion that is configured to display the setting information of the printer.

6. The printer according to claim 5, wherein the display portion is configured to sequentially display, as the setting information, the plurality of device IDs stored in the storage portion one by one,
wherein the operation portion comprises:
a switching portion that is configured to sequentially switch a device ID displayed on the display portion to another device ID; and
a determining portion that is configured to determine the device ID that has resulted from being switched by the switching portion and has been displayed on the display portion,
wherein the processing portion is configured to select the device ID determined by the determining portion.

7. The printer according to any one of claims 1 to 6, wherein, when the communication portion is connected to the host device, the communication portion is configured to transmit the device ID to the host device, the device ID being selected according to an operation that is input to the operation portion.
